Europäisches Patentamt

European Patent Office

Office européen des brevets

(19)

(11) Publication number: **0 154 666 B1**

(12) **EUROPEAN PATENT SPECIFICATION**

(45) Date of publication of patent specification: 05.06.91  (51) Int. Cl.5: **B60B 21/02**, B32B 15 02

(21) Application number: 84104013.2

(22) Date of filing: 10.04.84

(54) Rim.

(30) Priority: **25.02.84 JP 26344/84 U**

(43) Date of publication of application:
**18.09.85 Bulletin 85/38**

(45) Publication of the grant of the patent:
**05.06.91 Bulletin 91/23**

(84) Designated Contracting States:
**DE FR GB IT NL**

(56) References cited:
**EP-A- 0 066 357**
**DE-A- 1 951 141**
**FR-A- 2 348 765**
**GB-A- 2 035 231**

(73) Proprietor: **Takagi, Chikara**
**1349, Hirakata Fukuju-cho**
**Hashima-shi Gifu-ken(JP)**

(72) Inventor: **Takagi, Shigemasa**
**1349, Hirakata Fukuju-cho**
**Hashima-shi Gifu-ken(JP)**

(74) Representative: **Vetter, Ewald Otto,**
**Dipl.-Ing.(FH)**
**Bahnhofstrasse 30**
**W-8900 Augsburg(DE)**

Rank Xerox (UK) Business Services

## Description

### BACKGROUND OF THE INVENTION

#### 1. Field of the Invention

The present invention relates to a rim according to the preamble of claim 1 of a bicycle or the like.

#### 2. Description of the Prior Art

Rims supported by spokes of bicycles are classified as BE type, WO type, HE type, or other types, and the profiles of cross section and dimensions of these types are specified according to the kind of tire installed on the rim. Most rims supported by spokes of bicycles are made of a plated sheet of iron or a sheet of stainless steel.

Plating operation is quite hazardous to environmental hygiene. Further, waste water and material produced by such an operation cause serious environmental contamination. Accordingly, the expenditure required for the countermeasures against environmental pollution necessarily raises the cost of plating operation.

Recently, rims of stainless steel are supplanting rims of plated iron sheet, but, as well known, sheets of stainless steel are quite expensive, i.e., three to four times as expensive as iron sheets, and therefore the cost of raw material of rims tends to increase greatly.

### OBJECTS OF THE INVENTION

It is an object of the present invention to provide a rim having a sufficient strength.

It is another object of the invention to provide a rim which is not required to be plated and which exhibits a sufficient resistance to corrosion.

It is a further object of the invention to provide a rim which can be fabricated from a raw material cheaper than that of a rim consisting entirely of stainless steel.

It is a still other object of the invention to provide a rim whose circumferential seam can be readily welded during its production.

These objects are achieved by a rim comprising the characterizing features of claim 1.

Other and further objects of the invention will become obvious upon an understanding of the illustrative embodiments about to be described or will be indicated in the appended claims, and numerous advantages not referred to herein will occur to one skilled in the art upon employment of the invention in practice.

### BRIEF DESCRIPTION OF THE DRAWINGS

Figs. 1(a), 1(b) and 1(c) are fragmentary perspective views of rims of WO type, HE type and WO type, respectively, embodying the present invention;

Fig. 2 is a fragmentary cross-sectional view of a rim formed by molding a clad material of two-layer structure;

Fig. 3 is a fragmentary cross-sectional view of a rim formed by molding a clad material of three-layer structure; and

Fig. 4 is a fragmentary perspective view of a clad material out of which the rim shown in Fig. 2 is molded.

### DETAILED DESCRIPTION OF THE PREFERRED EMBODIMENTS

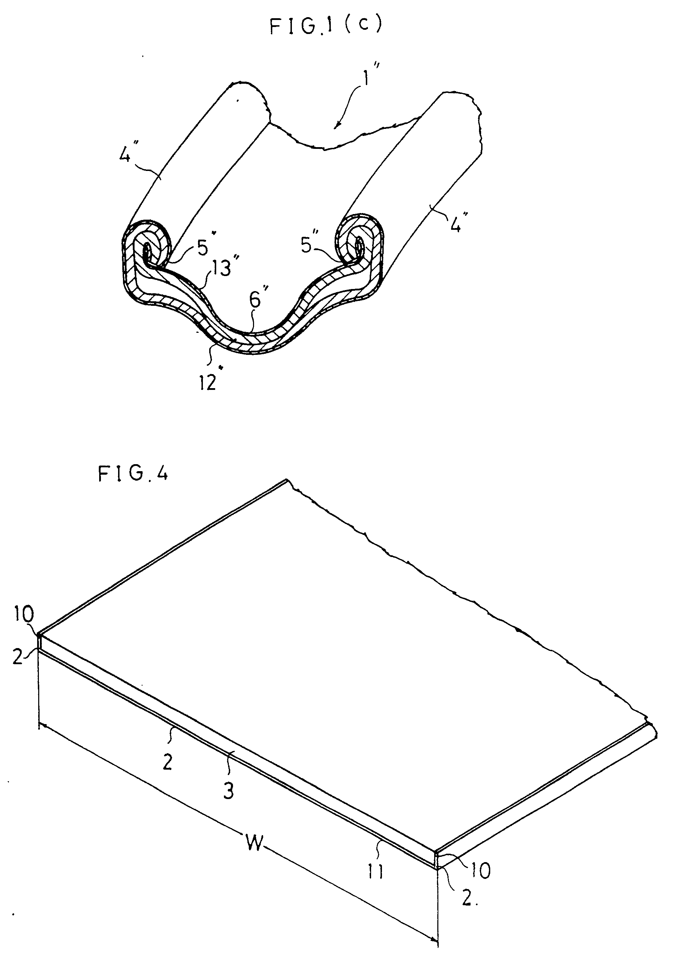

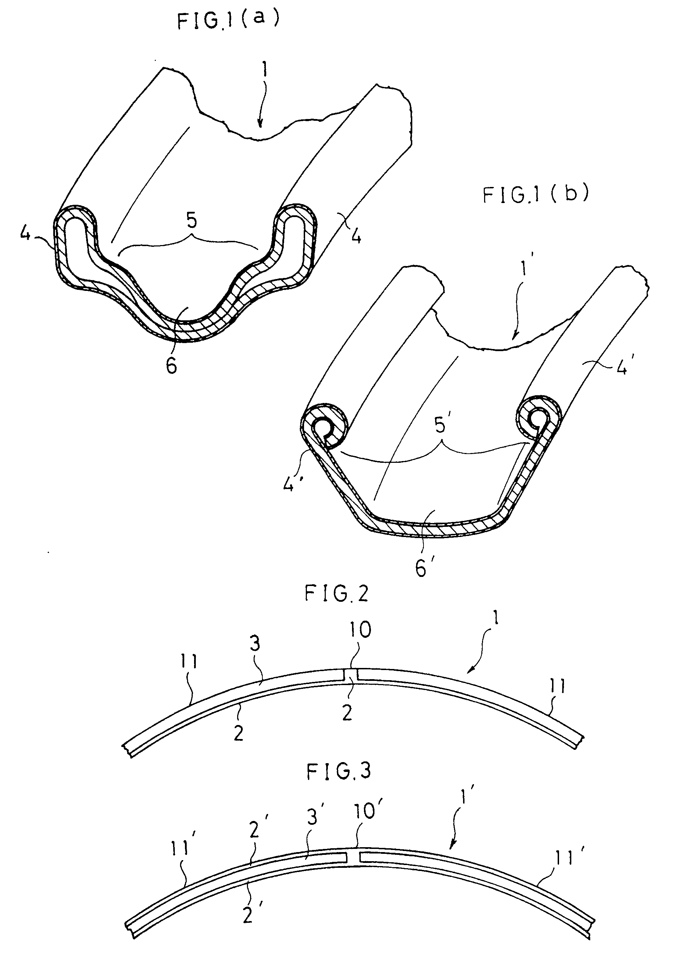

Embodiments of the invention which achieve the foregoing objects are hereinafter described with reference to Figs. 1-4.

Referring first to Fig. 1(a), there is shown a rim 1 of WO type. This rim has a pair of flanges 4 on opposite sides, a pair of bead seats 5 located on the inner side of the flanges 4, and a drop center 6 located between the seats 5.

Referring next to Fig. 1(b), there is shown a rim 1' of HE type which has a pair of flanges 4' on opposite sides, a pair of bead-anchoring portions 5' that are disposed on the inner side of the flanges 4' and are equivalent to the bead seats of the WO type, and a drop center 6' located between the anchoring portions 5'.

Referring next to Fig. 1(c), there is shown a rim 1" which is of WO type in the same way as the rim shown in Fig. 1(a). However, the rim 1" consists of an outer clad material 13", an inner clad material 12", and a pair of flanges 4" serving to bond together these two clad materials, unlike the rim 1 of Fig. 1(a) consisting of one clad material. If the outer clad material 13" on which a tire is installed is made of an iron sheet, the surface of the material 13" is preferably treated with an anticorrosive in a cheaper way than plating.

Referring next to Fig. 2, there is shown another rim 1 that has a circumferential seam where end portions 10 of a clad material are welded together consisting of a single layer 2 of stainless steel and a central portion 11 consisting of two layers of clad material, that is, a sheet 2 of stainless steel and an iron sheet 3. As an example, the clad material 2 of stainless steel has a thickness of 0.1 mm, and the clad material 3 of iron sheet has a thickness of 0.8 mm. The layer 2 of stainless steel is formed on the outer side of the rim 1.

Referring to Fig. 3, there is shown a further rim 1' that has a seam where end portions 10' of a clad material are welded together consisting of a single layer 2' of stainless steel and a central portion 11' consisting of three clad materials stacked on top of one another, i.e., a sheet 2' of stainless steel, an iron sheet 3', and another sheet 2' of stainless steel.

Referring next to Fig. 4, the rim 1 shown in Fig. 1(a) is molded out of a clad material having a length W that is adapted to the peripheral length of the rim. This material has a pair of laterally end portions 10 consisting of a single layer 2 of stainless steel and the central portion 11 consisting of a two-layer structure composed of a sheet 2 of stainless steel and an iron sheet 3.

The rim 1' shown in Fig. 1(b) is made of a clad material of three-layer structure shown in Fig. 3. This material is molded out of a sheet having a length W adapted to the peripheral length of the rim, and the both laterally end portions 10' of the sheet consist of a single layer 2 of stainless steel in the same manner as the aforementioned rim 1 shown in Fig. 1(a).

When the rim 1' of HE type shown in Fig. 1(b) is molded out of the clad material of double-layer structure shown in Fig. 4, the surface on which a tire is installed is treated with an anticorrosive in a more economical fashion than plating.

It is to be noted that the sheets 2 and 2' of stainless steel in the above embodiments can be replaced by sheets of nickel.

As thus far described, the clad material used for the novel rim contains approximately 4 parts of iron and less than 1 part of stainless steel, and therefore the novel rim can reduce its cost of raw material by about 40% as compared with the conventional rim of stainless steel.

Also, the surface of the novel rim which is directly exposed to rain water and muddy water is fully made of stainless steel, thus dispensing with plating. It would be readily understood that a sheet of stainless steel of 100 $\mu$ thick is much superior in resistance to corrosion to a plated sheet, i.e., coated with a thin metal layer of tens of microns thick.

The circumferential seam can be welded with exactly the same ease as the conventional rim of stainless steel, because the seam consists of a single layer of stainless steel.

As many apparently widely different embodiments of the invention may be made without departing from the spirit and scope thereof, it is to be understood that the invention is not limited to the specific embodiments thereof as defined in the appended claims.

## Claims

1. A rim (1;1';1") having a pair of flanges (4;4';4"), a pair of bead seats (5;5';5") located on the inner side of the flanges, and a drop center (6;6';6") located between the bead seats, characterized in that:
the rim (1;1';1") is formed out of a sheet of clad material having a length corresponding to the peripheral length of the rim the clad material including a central portion (11;11') having sheets of differing materials (2,3;2'.3') bonded together in a multi-layer structure. and opposing end portions (10;10') each formed from a single layer of metal sheet for welding the end portions of the clad material sheet together to form a ring shaped rim.

2. A rim as set forth in claim 1 wherein the differing sheets in the central portion (11) include an iron layer (3) and a stainless steel layer (2) and the end portions (10) are formed from stainless steel.

3. A rim as set forth in claim 1 wherein the differing sheets in the central portion (11') include an iron layer (3') that is sandwiched between a pair of stainless steel layers (2') and the end portions (10') are formed from stainless steel.

4. A rim as set forth in claim 2 wherein the stainless steel layer(2) is located opposite the surface on which a tire is installed.

5. A rim as set forth in claim 1. wherein the rim (1") includes an outer portion (13") and an inner portion (12") formed independent of the outer portion (13") and wherein at least the inner portion (12") is formed out of a sheet of clad material having a length as set forth in claim 1.

## Revendications

1. Jante (1; 1'; 1"), possédant une paire de rebords (4; 4'; 4"), une paire de portées de talons (5; 5'; 5") situées sur le côté intérieur des rebords, et une base creuse (6; 6'; 6") située entre les portées de talons. caractérisée en ce que
la jante (1; 1'; 1") est formée à partir d'une feuille de matériau plaqué d'une longueur correspondant à la longueur périphérique de la jante, le matériau plaqué comprenant une partie centrale (11; 11') présentant des feuilles de matériaux différents (2,3; 2'.3') mutuellement liés en une structure multicouche. et des parties terminales opposées (10; 10') constituées chacune d'une unique couche de métal en feuille. en vue d'assembler par soudage les parties terminales de la feuille de matériau plaqué pour former une jante de forme annulaire.

**2.** Jante selon la revendication 1, dans laquelle les différentes feuilles de la partie centrale (11) comprennent une couche de fer (3) et une couche d'acier inoxydable (2), et les parties terminales (10) sont réalisées en acier inoxydable.

**3.** Jante selon la revendication 1, dans laquelle les différentes feuilles de la partie centrale (11') comprennent une couche de fer (3') qui est prise en sandwich entre une paire de couches d'acier inoxydable (2'), et les parties terminales (10') sont réalisées en acier inoxydable.

**4.** Jante selon la revendication 2, dans laquelle la couche d'acier inoxydable (2) est situé à l'opposé de la surface sur laquelle est installé un pneumatique.

**5.** Jante selon la revendication 1, dans laquelle la jante (1") comprend une partie extérieure (13") et une partie intérieure (12") formée indépendamment de la partie extérieure (13"), et dans laquelle au moins la partie intérieure (12") est constituée d'une feuille de matériau plaqué d'une longueur telle que définie dans la revendication 1.

## Ansprüche

**1.** Radfelge (1; 1';1"), die ein Paar Flansche (4; 4'; 4"), ein Paar Wulstsitze (5; 5'; 5"), welche an der inneren Seite der Flansche angeordnet sind, und ein Felgenbettzentrum (6; 6'; 6") enthält, welches zwischen den Wulstsitzen angeordnet ist,
**dadurch gekennzeichnet,**
daß die Felge (1; 1'; 1") aus einer Platte aus plattiertem Material (clad material) gebildet ist, die eine Länge hat, welche der Umfangslänge der Felge entspricht, und das plattierte Material einen Mittelbereich (11; 11') enthält, der Platten aus verschiedenen Materialien (2, 3; 2', 3') aufweist, welche in einer Viellagen-Struktur miteinander verbunden sind, und gegenüberliegende Endbereiche (10; 10') hat, welche je aus einer einzigen Metallplattenlage bestehen, um die Endbereiche der plattierten Materialplatte zusammenzuschweißen und dadurch eine ringförmige Felge zu bilden.

**2.** Radfelge nach Anspruch 1, bei welcher die verschiedenen Platten im Mittelbereich (11) eine Eisenlage (3) und eine Lage aus rostfreiem Stahl (2) enthalten und die Endbereiche (10) aus rostfreiem Stahl gebildet sind.

**3.** Radfelge nach Anspruch 1, bei welcher die verschiedenen Platten im Mittelbereich (11') eine Eisenlage (3') enthalten, welche sandwichartig zwischen einem Paar Lagen aus rostfreiem Stahl (2') eingebettet ist, und bei welcher die Endbereiche (10') aus rostfreiem Stahl gebildet sind.

**4.** Radfelge nach Anspruch 2, bei welcher die Schicht aus rostfreiem Stahl (2) gegenüber der Oberfläche, auf welcher ein Reifen montiert wird, angebracht ist.

**5.** Radfelge nach Anspruch 1, welche (1") einen äußeren Bereich (13") und einen inneren Bereich (12") enthält, welcher unabhängig vom äußeren Bereich (13") gebildet ist, und bei welcher mindestens der innere Bereich (12") aus einer Platte aus plattiertem Material (clad material) gebildet ist, welche eine Länge hat, wie sie in Anspruch 1 angegeben ist.

FIG. 1 (c)

FIG. 4

EP 0 154 666 B1

FIG.1(a)

FIG.1(b)

FIG.2

FIG.3